(19) Europäisches Patentamt / European Patent Office / Office européen des brevets

(11) **EP 4 108 739 A1**

(12) **EUROPEAN PATENT APPLICATION**

(43) Date of publication:
**28.12.2022 Bulletin 2022/52**

(21) Application number: **21315098.0**

(22) Date of filing: **21.06.2021**

(51) International Patent Classification (IPC):
*C10G 2/00* *(2006.01)*    *B01D 53/32* *(2006.01)*
*C01B 17/04* *(2006.01)*    *C01B 32/40* *(2017.01)*
*C01B 32/50* *(2017.01)*

(52) Cooperative Patent Classification (CPC):
**C10G 2/32; B01D 53/32; C01B 17/04; C01B 32/50;**
C01B 32/40

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **TotalEnergies OneTech
92400 Courbevoie (FR)**

(72) Inventors:
• **Nesterenko, Nikolai
1402 Nivelles (Thines) (BE)**
• **Veryasov, Gleb
1400 Nivelles (BE)**

(74) Representative: **Mellet, Valérie Martine
Patent 42
5, rue Dicks
4081 Esch-sur-Alzette (LU)**

(54) **PROCESS FOR THE INCORPORATION OF CO2 INTO HYDROCARBONS**

(57)    Process for the incorporation of carbon dioxide, $CO_2$, into a hydrocarbon comprising a first step of converting the $CO_2$ into COS and a second step for converting the COS into CO and sulphur using an electrical fluidized bed.

EP 4 108 739 A1

## Description

### Field of the invention

The present disclosure relates to the conversion of carbon dioxide into a hydrocarbon stream. The process of the present disclosure uses sulfidic compounds to convert carbon dioxide into carbon monoxide followed by the conversion of the obtained carbon monoxide into other compounds using Fischer-Tropsch synthesis, by methanol route followed by MTO or MTP, by hydroformulation, and other methods.

### Background of the invention

In refinery and petrochemical plants, the presence of hydrotreatment units leads to the presence of a stream containing hydrogen and hydrogen sulphide. The various boilers or furnaces used also lead to the production of streams containing carbon dioxide ($CO_2$). The hydrogen, hydrogen sulphide and carbon dioxide are not always easily valorised in those plants. It is also not completely straightforward to easily valorise all those three streams. In particular, it is relatively difficult to valorise $CO_2$. Hence the $CO_2$ is often simply released into the atmosphere as exhaust gas.

In the context of global warming, it is necessary to limit the quantity of $CO_2$ released into the atmosphere. It is therefore desired to find a new approach to valorise $CO_2$ in for instance hydrocarbons that can be further used in refineries. The conversion of $CO_2$ requires energy. It would therefore be advantageous to find conversion routes requiring less energy with the help of other streams present in the refinery or the petrochemical plants.

The literature is relatively abundant when it relates to the conversion of carbon monoxide into other constituents like carbonyl sulphides. In particular, it is also noticeable that WO2011084973 describes a process for the manufacture of carbon disulphide comprising reacting carbon dioxide with hydrogen sulphide to form carbonyl sulphide and water; and absorbing at least a portion of the water with a sorbent, leaving a mixture comprising carbonyl sulphide, carbon dioxide, and hydrogen sulphide.

Other documents like US4999178 describes a thermochemical cycle for the recovery of hydrogen and sulfur by splitting hydrogen sulfide, based upon initial reactions between the hydrogen sulfide and carbon dioxide or carbon monoxide. The reaction disclosed is the direct reaction of $CO_2$ with $H_2S$ to form CO and sulphur. The reactions described in this document are thermal reactions from a theoretical point of view.

Similarly, it is worth noting that WO2018127852 describes a method of catalytically producing carbon monoxide (CO), hydrogen ($H_2$), sulphur dioxide ($SO_2$), and elemental sulfur (S) directly from carbon dioxide ($CO_2$) and hydrogen sulfide ($H_2S$). The method includes (a) obtaining a reaction mixture comprising $CO_2(g)$ and $H_2S(g)$, and (b) contacting the reaction mixture with a catalyst under conditions sufficient to produce a product stream comprising $CO(g)$, $H_2(g)$, $SO_2(g)$, and $S_2(g)$ from $CO_2(g)$ and $H_2S(g)$.

In US2016/0185596, the following overall reaction is described:

$$CO_2 + 2H_2S \rightarrow CO + H_2 + S_2 + H_2O$$

The reaction heat necessary for this reaction is brought by the partial conversion of $H_2S$ into $SO_2$ thanks to the presence of a small amount of oxygen in the feed stream. In other documents like for instance WO02/08119, $H_2S$ is split into sulphur and $H_2$ in the presence of a hydrocarbon undergoing partial oxidation. The heat necessary for the reaction is brought by this partial oxidation.

Although it seems more advantaging to directly react the $CO_2$ with the $H_2S$ to produce CO and sulphur, this direct reaction present significant drawbacks. In particular, the yields are particularly small and the selectivity toward sulphur and hydrogen is not satisfying.

The reaction of $CO_2$ with $H_2S$ has been described in prior art documents. However, there is still a need to improve this conversion of $CO_2$. In addition, there is also still a need to be able to incorporate the process of the conversion of $CO_2$ into valuable hydrocarbons into an existing refinery or petrochemical plant.

### Summary of the invention

According to a first aspect, the disclosure provides a process for the incorporation of carbon dioxide ($CO_2$) into a hydrocarbon comprising the following steps:

b) Providing a first stream containing at least 30 wt. % of carbon dioxide ($CO_2$) and at least 20 wt. % of hydrogen sulphide ($H_2S$) based on the total weight of said first stream;

c) Converting said first stream into a second stream containing at least 10 wt. % of carbonyl sulphide (COS) based on the total weight of said second stream and water at a temperature ranging from 50 to 800°C, at a pressure ranging from 0.01 to 5 MPa (from 0.1 to 50 bar) and at a GHSV ranging from 0.1 to 10 h$^{-1}$;

d) Separating from said second stream water and preferably separating the unconverted carbon dioxide ($CO_2$) and the unconverted hydrogen sulphide ($H_2S$) if any to obtain a third stream containing at least 10 % wt of carbonyl sulphide (COS);

f) Putting said third stream in an electrical fluidized bed to obtain a fourth stream containing carbon monoxide (CO) and sulphur vapor ($S_2$);

g) Recovering from said fourth stream sulphur vapor and a fifth stream containing carbon monoxide and optionally carbon disulphide ($CS_2$) if any;

i) Converting the carbon monoxide (CO) of said fifth stream into (ii) alcohols being further converted into olefins or converting the carbon monoxide (CO) of said fifth stream into (iii) hydrocarbons in presence of hydrogen to incorporated it into a further hydrocarbon stream or any combinations of (ii) or (iii)

**remarkable in that** said electrical fluidized bed of step f) comprises at least one fluidized bed reactor comprising at least two electrodes, a bed comprising particles, and optionally a solid discharge system wherein said particles of the bed are in a fluidized state by passing upwardly through the said bed a fluid stream, to obtain a fluidized bed and wherein the heating of said fluidized bed is done at a temperature ranging from 100°C to 3000°C to convert carbonyl sulphide (COS) into carbon monoxide (CO) and sulphur and wherein the particles of said electrical fluidized bed comprise electrically conductive particles, wherein at least 10 wt. % of the particles based on the total weight of the particles of the bed are electrically conductive particles and have a resistivity ranging from 0.001 Ohm.cm to.500 Ohm.cm at 800°C and wherein said heating the fluidized bed is performed by passing an electric current through the fluidized bed.

In a preferred embodiment, said process comprises one or more of the following steps:

a) Providing a gaseous hydrotreatment stream effluent containing from 10 to 80 wt% of hydrogen ($H_2$) and from 5 to 40 wt. % of hydrogen sulphide ($H_2S$) based on the total weight of said gaseous hydrotreatment stream effluent, preferably the gaseous hydrotreatment stream effluent originates from a hydrotreatment, separating from this gaseous hydrotreatment stream effluent the hydrogen ($H_2$) and the carbon monoxide (CO) if any from the hydrogen sulphide ($H_2S$), preferably in a first amine wash, and sending the hydrogen sulphide ($H_2S$) obtained in said first stream; and/or

e) After step d), the unconverted carbon dioxide ($CO_2$) and the unconverted hydrogen sulphide ($H_2S$) are recycled at the inlet of said step b); and/or

h) after step g), the carbon disulphide ($CS_2$) is separated from the fifth stream and hydrolysed into carbon monoxide (CO) and carbon dioxide ($CO_2$) in presence of water at a temperature ranging from 50 to 800°C, at a pressure ranging from 0.1 to 5 MPa (1 to 50 bar) and at a GHSV ranging from 0.1 to 10 h$^{-1}$ over a catalyst being alumina ($Al_2O_3$), titania ($TiO_2$), ruthenia ($RuO_2$) or any mixture thereof; and/or

j) the carbon disulphide ($CS_2$) recovered at g) is hydrolysed at a temperature ranging from 50 to 400°C, a pressure ranging from 0.1 to 5 MPa (from 1 to 50 bar) with at least a molar ratio of water over carbonyl sulphide (COS) of at least 1.5 to recover carbon dioxide ($CO_2$) and/or carbonyl sulphide (COS) being further sent back to the steps b) or c).

In a preferred embodiment, the hydrogen used in said step i) for the conversion of said carbon monoxide (CO) into (ii) alcohols and/or into (iii) hydrocarbon is originating from said step a).

In a preferred embodiment, said step d) water is removed with a sorbent being preferably the sorbent is selected from silica, silica gel, molecular sieves (such as 13X) or any mixture thereof.

In a preferred embodiment, said step c) and said step d) are performed simultaneously in the same reactor with said sorbent.

In a preferred embodiment, said steps c) is performed in the presence of a catalyst; with preference, said step c) and said step d) are performed simultaneously in the same reactor with a sorbent and with a catalyst. For example, said sorbent is selected from silica, silica gel, molecular sieves or any mixture thereof. With preference, the molecular sieves are or comprise 3A and/or13X. With preference said catalyst is a molecular sieve 3A.

In a preferred embodiment, the carbon monoxide (CO) recovered at step i) is converted into (ii) an alcohol via a biological process or via a chemical process. With preference, , the carbon monoxide (CO) recovered at step i) is converted into (ii) an alcohol via a chemical process, said chemical process being performed at a pressure ranging from 5 to 200 bar and/or at a temperature ranging from 150 to 350 °C, preferably the chemical process is a catalytic reaction using a catalyst containing Cu, Zn, Al, Ga, Sn, Ge, Mn, Mg, Zr, Cr, Ba, W and/or Ce, preferably said alcohol is methanol, or ethanol or propanol or butanol or any mixture thereof, even more preferably said alcohol is further dehydrated in olefins having the same number of carbon atoms as said alcohol and said olefins is further polymerized.

In a preferred embodiment, said carbon monoxide (CO) recovered at step i) is converted into (iii) hydrocarbon via the Fischer Tropsch reaction at temperatures ranging from 150 to 350°C, at a pressure ranging from 1 to 100 bara and/or under a catalytic reaction using a catalyst containing Co, Ru, and/or Fe deposited on silica and/or alumina or any mixture thereof.

In a preferred embodiment, the carbon dioxide ($CO_2$) of said first stream originates from the exhaust gas of refinery streams, water-gas shift units, steam reforming units, biogas digesters, native carbon dioxide ($CO_2$) from natural gas or direct air capture units being further concentrated in a second amine wash

In a preferred embodiment, said sulphur recovered in step e) is in the form of liquid sulphur being preferably S2 and/or S8.

In a preferred embodiment, said step c) is performed in a fixed bed preferably using a sulphide catalyst being preferably a catalyst that comprises at least one metal of group VI,B for example Mo, W in combination or not with a promotor selected from at least one metal of group VIII and/ VIIIB, for example, Ni and/or Co, and/or a mixture thereof, these metals being used in the sulfided form and preferably supported on alumina, titania, zirconia, silica, carbon and/or mixtures thereof

In a preferred embodiment, said third stream of step c) contains at least 15 % wt of carbonyl sulphide (COS) based on the total weight of said third stream of step c); preferably at least 20 wt. % of carbonyl sulphide (COS) to at most 80 wt. % preferably at most 75 wt. % of carbonyl sulphide (COS) based on the total weight of said third stream of step c).

In a preferred embodiment, said first stream comprises at least 20 wt. % of carbon dioxide ($CO_2$) based on the total weight of said first stream.

In a preferred embodiment, said first stream comprises at least 20 wt. % of hydrogen sulphide ($H_2S$) based on the total weight of said first stream.

In a preferred embodiment, in said step g) the recovery of said carbon monoxide (CO) from said sulphur is performed via a gas-solid separation, preferably the purity of the carbon monoxide (CO) obtained is of at least 80 %, even more preferably at least 90 % the most preferred at least 95 %.

In a preferred embodiment, said sulphur recovered at step f) is a mixture of S2 and S8 that is further treated to convert said S2 into S8 with a yield of at least 95 % by cooling the stream to temperatures below 444°C

In a preferred embodiment, the unconverted carbon dioxide ($CO_2$) and the unconverted hydrogen sulphide ($H_2S$) recovered at step d) are recycled at the inlet of step c)

In a preferred embodiment, said first stream comprises at most 10 wt. % of water, more preferably at most 5 wt. % of water, even more preferably at most 1 wt. % of water, in the most preferred embodiment, said first stream does not comprise water. When the first stream comprises water, it is preferably before step c). In a preferred embodiment, water is removed with the help of a sorbent.

The process is advantageous in that it leads to the simultaneous conversion of carbon dioxide ($CO_2$) into carbon monoxide (CO) and of hydrogen sulphide ($H_2S$) into sulphur. The carbon monoxide (CO) hence formed that be further converted into other useful molecules such as alcohols for instance. The sulphur obtained can be easily stored and further used in other processes such as the preparation of sulfuric acid. The overall process can be described with the following chemical equations:

$$CO2 + H2S \rightarrow COS + H2O$$

$$2COS \rightarrow 2CO + S2$$

The process of the disclosure, therefore, allows converting an acid gas, generally considered as a waste, into more valuable products.

The process of the disclosure is also advantaging in that the carbon dioxide ($CO_2$) recovered can be converted into valuable products such as alcohols or hydrocarbons. Hence the process of the disclosure allows limiting the rejection of carbon dioxide ($CO_2$) in the atmosphere is also sought to limit the impact of global warming.

The process of the disclosure is also advantageous in that electricity is used instead of fuel. When electricity is used, it is possible to use electricity produced by renewable means. Hence the overall process has a reduced carbon dioxide ($CO_2$) impact.

According to a second aspect, the disclosure provides an installation to carry out the process incorporation of carbon dioxide, $CO_2$, into a hydrocarbon according to any of the embodiments of the first aspect remarkable in that it comprises:

- A CO2 sulphuration unit
- A first separation unit
- A COS decomposition unit
- A second separation unit
- A CO conversion unit

Wherein the CO2 sulphuration unit, the first separation unit, the COS decomposition unit, the second separation unit and the CO conversion unit are fluidically connected in series in the order mentioned;
wherein said installation further comprises at least a recycle line to recycle the unconverted carbon dioxide ($CO_2$) and the unconverted hydrogen sulphide ($H_2S$) separated in said first separation unit into said $CO_2$ sulphuration unit;
wherein said installation further comprises at least a recycle line to recycle the unconverted COS separated for said second separation unit into said COS decomposition unit;
wherein the effluents of the CO conversion unit are further incorporated into a hydrocarbon stream.

**Description of the figures**

- Figure 1 represents an overview of a possible process scheme according to the disclosure.
- Figure 2 represents another possible process scheme according to the disclosure.

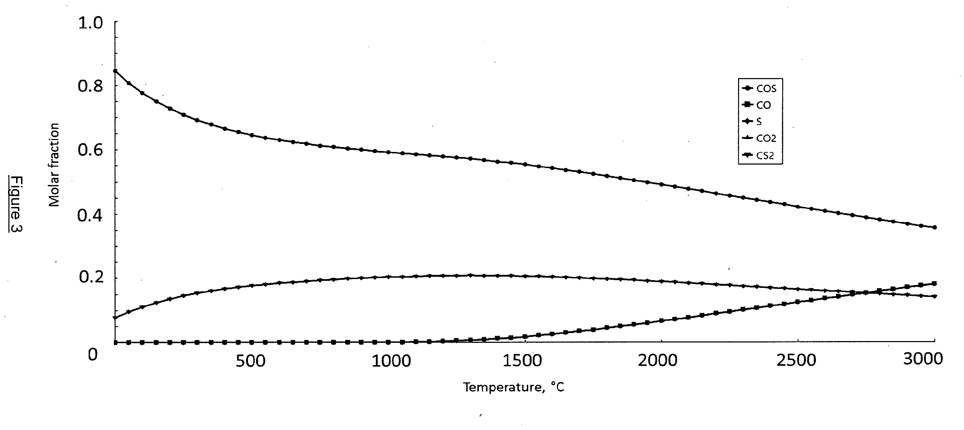

- Figure 3 represents the thermodynamic equilibrium for COS splitting at different temperatures (°C).

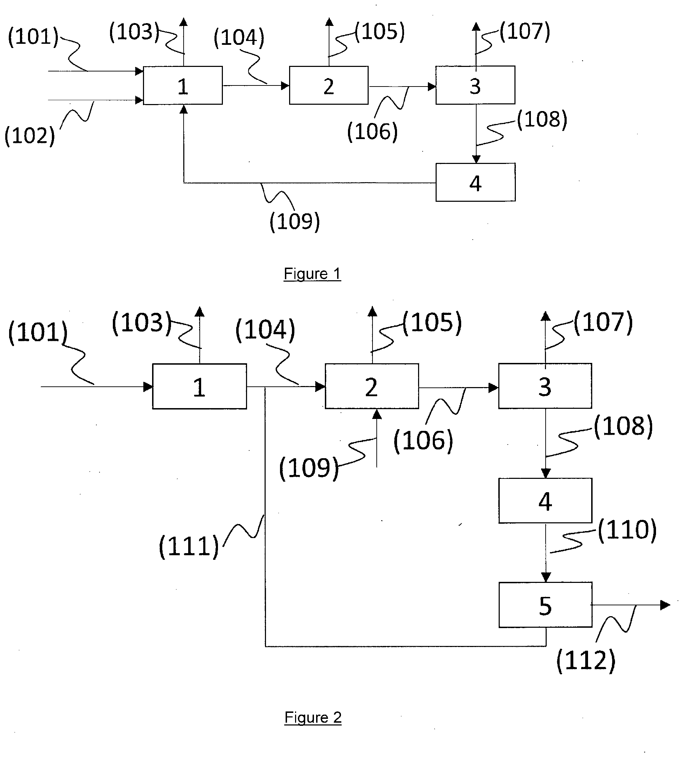

In **figure 1,** a gaseous stream (101) comprises $H_2S$. As a non-limiting example, it originates from a cold high-pressure separator of hydrotreatment. The stream (101) is sent to unit 1. The gaseous stream (101) may contain various components such as $H_2O$, $NH_3$, $H_2S$, $H_2$ and hydrocarbons. The stream (102) containing mainly the $CO_2$ to be converted is also sent to unit 1. Unit 1 is an amine wash unit. Unit 1 allows separating the $CO_2$, $H_2O$, $NH_3$ and $H_2S$ into a stream (104) from the other components in the stream (103). The stream (103) containing mainly $H_2$ and also CO is then for instance recycled at the inlet of the hydrotreatment section. The stream (104) is then sent to unit 2. Unit 2 is a membrane reactor. In unit 2, the separation for the water present in the stream and the conversion of the $CO_2$ and $H_2S$ into COS and $H_2O$ are performed simultaneously. When $H_2O$ is simultaneously separated while at the same time being produced by the reaction, the equilibrium of the reaction is displaced toward the products. The overall yield of the reaction is then improved thanks to the membrane reactor. At the exit of unit 2, the stream (105) containing $H_2O$ is obtained and the stream (106) containing the COS is obtained. The stream (106) is then sent to unit 3. In unit 3, the COS is cracked into CO and sulfur. The sulfur is in the form of gaseous S2 and extracted via stream (107). The cracking of COS into CO and sulfur is not always selective. CS2 may be formed during the reaction. The CO obtained, the unconverted compounds and the CS2 formed are extracted via stream (108) and sent to unit 4. In unit 4, the CS2 present is hydrolysed into CO2. At the exit of unit 4, the CO2 and CO are sent back the unit 1. In this unit 1, the unconverted CO2 is separated to be sent into unit 2. The CO is separated into the stream (103). The stream (103) can be sent to the hydrotreatment or sent to another to be converted into alkane via the Fischer Tropsch reaction or converted into alcohols such as methanol.
In **figure 2,** almost the same process as in figure 1 is presented. The differences with figure 1 can be highlighted as follows. The stream containing the CO2 is not added to unit 1 but to unit 2 via the stream (109). The stream obtained at the exit of unit 4 is sent to a dedicated amine wash unit 5. In unit 5, the CO and CO2 are separated from the H2S. The CO and CO2 are recovered via stream (112) to be further converted or stocked. The H2S is recovered in the stream (111) and sent to the inlet of unit 2.

**Definitions**

For the invention, the following definitions are given:
The term "transition metal" refers to an element whose atom has a partially filled d sub-shell, or which can give rise to cations with an incomplete d sub-shell (IUPAC definition). According to this definition, the transition metals are Sc, Ti, V, Cr, Mn, Fe, Co, Ni, Cu, Zn, Y, Zr, Nb, Mo, Tc, Ru, Rh, Pd, Ag, Cd, La, Hf, Ta, W, Re, Os, Ir, Pt, Au, Hg, Ac, Rf, Db, Sg, Bh, Hs, Mt, Ds, Rg, and Cn.
Within the meaning of the present disclosure, the term "monodisperse single nanocrystals" is understood to mean that the statistical distribution of the size of the single nanocrystals is relatively narrow.
Within the meaning of the present disclosure, the term "single nanocrystals" is understood to mean individual nanocrystals or non-agglomerated nanocrystals.
In the present disclosure, the zeolite crystals are said "defect-free" or "silanol defect-free". This is understood to mean zeolite crystals comprising a negligible number of silanol-defective sites, arising from the presence of silanols and/or silanol nests. Said material is consequently highly hydrophobic due to the absence of Si-OH moistures. Silanol defects are quantified using (i) IR characterization of activated (calcined) samples, or alternatively (ii) using 29Si-NMR.
The yield to particular chemical compounds is determined as the mathematical product between the selectivity to said particular chemical compounds and the conversion rate of the chemical reaction. The mathematical product is expressed as a percentage.
The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of endpoints also includes the recited endpoint values themselves (e.g. from 1.0 to 5.0 includes both 1.0 and 5.0). Any numerical range recited herein is intended to include all sub-ranges subsumed therein.

The particular features, structures, characteristics or embodiments may be combined in any suitable manner, as would be apparent to a person skilled in the art from this disclosure, in one or more embodiments.

## Detailed description of the invention

### The first stream

The first stream comprises at least 10 wt. % of $CO_2$ and at least 10 wt. % of $H_2S$. The first stream can originate from anywhere. In a preferred embodiment, at least part or all of the $CO_2$ of the first stream comes from the exhaust gas of refinery streams, water-gas shift units, steam reforming units, biogas digesters, native $CO_2$ from natural gas or direct air capture units. In another preferred embodiment, the $H_2S$ of the first stream originates from refinery streams, natural gas plants, or $CS_2$ production facilities. Effluents of refineries are however preferred. In particular, the first stream can be at least partially constituted of the gaseous effluent of a hydrotreater of a refinery namely it can be at least partially constituted of gaseous hydrotreatment unit stream effluent. The typical hydrotreatment of a refinery desulphurizes the feedstock by converting organic sulphides, e.g. thiophenes, into hydrocarbons and gaseous $H_2S$ with the help of $H_2$. The gaseous hydrotreatment stream effluent comprises typically $H_2$ that was put in excess for the hydrotreatment reaction and the $H_2S$ recovered at the exit of the hydrotreatment. The first stream may also contain other components like water ($H_2O$), nitrogen ($N_2$), ammonia ($NH_3$), methane ($CH_4$), ethane or propane or any mixture thereof. The typical composition of gaseous effluent of a hydrotreater being a hydrodesulfurization are the following: $H_2O$ ranges from 0.1 wt. % to 5 wt. %; $H_2$ from 10 to 70 wt. %; $N_2$ from 5 to 15 wt. %; $NH_3$ from 0.1 wt. % to 5 wt. %; $H_2S$ from 10 to 50 wt. %; and/or saturated hydrocarbons ($CH_4$, $C_2H_6$, $C_3H_8$, $C_4H_{10}$ and $C_5H_{12}$) from 1 wt. % to 30 wt. %.

When the first stream comprises water, the water is preferably removed before step c). To remove the water, sorbents are used. Any suitable sorbent capable of adsorbing water can be used. Silica, silica gel, or molecular sieves such as 13X or any mixture thereof can for instance be used to dry said first stream. Once saturated, the sorbents can be regenerated by any methods known in the art. For instance, the sorbents can be put offline during the process and the pressure and/or the temperature can be changed to desorb the water and to regenerate the sorbents. A dry gas such as $N_2$ can also be used to desorb the water from the sorbent. In one embodiment, two or more train of reactors are used as swing beds. In that case, one bed of sorbent (first bed) is used in the reactor until it has been saturated, at which point it is replaced by another bed (second bed) of sorbent in the reactor, while the first bed is dried to remove the water. In another embodiment, the sorbent may be removed and sent and to a regenerator to be dried, and then recycled for use again.

### Reaction of $CO_2$ with $H_2S$ (step c)

In the step c), carbon dioxide is first reacted with hydrogen sulphide to form carbonyl sulphide and hydrogen according to the following reaction:

$$CO_2 + H_2S \rightarrow COS + H_2O \quad (1)$$

The reaction will be carried out letting the gaseous carbon dioxide and gaseous hydrogen sulphide reacting together at a temperature ranging from 50 to 800°C at a pressure ranging from 0.1 to 5 MPa (1 to 50 bar) and at a GHSV ranging from 0.1 to 10 $h^{-1}$.

The reaction of step c) produce water. It is preferable to remove the water to avoid having the COS hydrolyzed into $CO_2$ and $H_2S$. Removal of water also helps to push the equilibrium of the reaction to produce more carbon oxysulfide. Water can be removed in a separated step d) for instance with a sorbent. Water can also be separated at least partially during step c). A sorbent can be used to separate water in step c). The sorbent used in step c) can be the same or a different sorbent from the sorbent used in step d). When a sorbent is used in step c), the sorbent used in step d) is used as a finishing sorbent to remove the traces of water.

The sorbents used in step c) and/or d) can be any suitable sorbent capable of adsorbing water. Silica, silica gel, or molecular sieves such as 13X or any mixture thereof can for instance be used in step c) and/or d). The sorbents used in step c) and/or d) can be regenerated by any methods known in the art. For instance, the sorbents can be put offline during the process and the pressure and/or the temperature can be changed to desorb the water and to regenerate the sorbents. A dry gas such as $N_2$ can also be used to desorb the water from the sorbent. In one embodiment, two or more train of reactors are used as swing beds in step c) and/or d). In that case, one bed of sorbent (first bed) is used in the reactor until it has been saturated, at which point it is replaced by another bed (second bed) of sorbent in the reactor, while the first bed is dried to remove the water. In another embodiment, the sorbent may be removed and sent and to a regenerator to be dried, and then recycled for use again.

In one preferred embodiment, at the end of step c), the water has been at least partially removed with the use of a sorbent, leaving COS and unreacted $CO_2$ and/or $H_2S$.

In a more preferred embodiment, the reaction of step c) is performed with a catalyst. The catalyst can be used alone. In a preferred embodiment, the catalyst is a mixed with a sorbent being preferably chosen among silica, silica gel, or molecular sieves such as 13X or any mixture thereof. In a more preferred embodiment, the catalyst presents a sorption function. For instance, the active phase of the catalyst can be deposited in a support being capable to adsorb water. Non-limiting examples of possible support for the catalyst includes silica, silica gel, or molecular sieves such as 13X or any mixture thereof.

In a preferred embodiment, the catalyst used in step c) is mixed metal sulphides, and sulphides of transition metals, in particular silica-supported metal sulphides. Other suitable catalysts include silica, amorphous silica-alumina (ASA) commercially available from CRI, and zeolite catalysts such as ZSM-5 commercially available from Zeolyst International. When the catalyst is a sulphur based catalyst, it is preferably based on metal oxides chosen from oxides of metals from Group VI-B (Mo, W, and the like) and VIII-B (Co, Ni, Pt, Pd, Ru, Rh, and the like) supported on a support chosen from alumina, silica/alumina, zeolite, ferrierite, phosphated alumina, phosphated silica/alumina, and the like. Preferably, the catalyst used will be NiMo, CoMo, NiW, PtPd or a mixture of two or more of these. The catalyst used can also be based on metals in the bulk state, such as the commercially known catalyst of Nebula type. The catalyst can also be based on metal oxides chosen from oxides of metals from Group VI-B (Mo, W, and the like) and VIII-B (Co, Ni, Pt, Pd, Ru, Rh, and the like) supported on a support chosen from alumina, silica/alumina, zeolite, ferrierite, phosphated alumina, phosphated silica/alumina, and the like, preferably NiMo, CoMo, NiW, PtPd or a mixture of two or more of these.

Even more preferably, the catalyst is based on nickel oxides on an acidic support, such as amorphous silica/alumina, zeolite, ferrierite, phosphated alumina, phosphated silica/alumina, and the like.

In a more preferred embodiment, the catalyst is metal exchanged zeolite composed of a zeolite material comprising least one metal M selected from W, V, Mo, Sn, Zr, Ag, Co, Ni, Cu, Ti, In, Zn and any mixture thereof, with silicon to metal M molar ratio Si/M ranging from 117 to 65440 as determined by inductively coupled plasma optical emission spectrometry. Said metal exchanged zeolite being preferably prepared by a method comprising the following steps:

a) providing a synthetic zeolite material;
b) optionally washing said synthetic zeolite material and drying it at a temperature of at least 50°C for at least 2h;
c) optionally calcining the synthetic zeolite material obtained at the previous step at a temperature of at least 200°C for at least 1h;
d) putting said synthetic zeolite material in a clear solution comprising one source of alkali metal M' selected from Li, Na, K, or Cs and at least one metal M wherein both M and M' are fully soluble in water and originate from the same compound; and wherein the molar ratio M'/M is of at least 1 and the weight ratio of said synthetic zeolite over said clear solution is of at least 0.5;
e) optionally stirring the solution obtained at step d) for at least 30 min, preferably at room temperature and/or atmospheric pressure;
f) heating the solution for at least 12h and at a temperature of at least 50°C preferably under autogenous pressure so that the solution does not evaporate;
g) separating the liquid from the solid obtained at the previous step and washing the solid obtained;
h) drying the solid obtained at the previous step and calcining it at a temperature of at least 200°C for at least 1h and recovering a metal-containing synthetic zeolite material.

The method of preparation of the metal exchanged zeolite presents the advantage that the metal M suppresses the defects being the silanols and silanol nests. The defects are saturated with metal coordinated with 4 or 2 Si (T-atoms) with oxygen bridges depending on its coordination stage.

The possibility to start with a synthetic zeolite material already prepared is particularly advantaging. It allows having good control of the properties of the starting material such as the crystal size, the Si/Al molar ratio etc. while still having the possibility to perform the substitution by the metal M.

According to a preferred embodiment of the disclosure, the synthetic zeolite material has a BEA or an MFI or an FAU framework type, preferably, the synthetic zeolite material has a BEA or an MFI framework type, more preferably an MFI framework type.

For example, the cross-polarization spectra {1H} 29Si CP MAS NMR of the metal-containing synthetic zeolite material recovered on step h) presents no peak. This indicates the absence of silanol species (i.e. defects) in the zeolite.

For example, the ratio of surface OH groups between the synthetic zeolite material provided in step a) and the metal-containing synthetic zeolite material recovered in step h) is at least 2.0; with preference, at least 2.5. This indicates that the number of extra-framework species such as surface OH has been reduced by comparison to the initial synthetic zeolite material and that therefore its stability has been increased.

For example, the synthetic zeolite material comprises no aluminium, or comprises aluminium with a Si/Al molar of at least 5 as determined by inductively coupled plasma optical emission spectrometry, preferably of at least 10 or of at least 20; more preferably of at least 50; even more preferably of at least 80 and most preferably of at least 100.

With preference, whatever is the framework type of the synthetic zeolite material, one or more of the following embodiments can be used to better define the product used in the method and/or produced by the method:

- The synthetic zeolite material comprises no aluminium, or comprises aluminium with a Si/Al molar of at least 5 or of at least 10 as determined by inductively coupled plasma optical emission spectrometry, preferably of at least 20; more preferably of at least 50; even more preferably of at least 80 and most preferably of at least 100.
- The synthetic zeolite material comprises no aluminium, or comprises aluminium with a Si/Al molar of at most 1000 as determined by inductively coupled plasma optical emission spectrometry, preferably of at most 500; more preferably of at most 490; even more preferably of at most 450 and most preferably of at most 400 or of at most 350.
- The synthetic zeolite material comprises no aluminium, or comprises aluminium with a Si/Al molar ratio ranging from 5 to 1000 as determined by inductively coupled plasma optical emission spectrometry; preferably ranging from 10 to 500; more preferably ranging from 20 to 490; even more preferably ranging from 50 to 450, most preferably ranging from 80 to 400 and even most preferably ranging from 100 to 350.
- The synthetic zeolite material comprising aluminium with the Si/Al molar ratio of at least 5 as determined by inductively coupled plasma optical emission spectrometry, is obtained via dealumination.
- The metal M is selected from W, V, Mo, Sn, Zr, Ag, Co, Ni, Cu, Ti, In and Zn or any mixture thereof; preferably selected from W, V, Mo, Sn, Zr, Co, Ni, Cu, Ti, In, Zn and any mixture thereof; more preferably selected from W, V, Mo, Sn, Zr, Ni, Cu, Ti, and any mixture thereof; even more preferably selected from W, V, Mo, Sn, Zr and any mixture thereof; most preferably Mo, Sn and V or any mixture thereof; and even most preferably is or comprises Mo.
- The metal-containing synthetic zeolite material has a silicon to metal M molar ratio Si/M is ranging from 179 to 65440 as determined by inductively coupled plasma optical emission spectrometry; preferably ranging from 438 to 1752.
- The metal-containing synthetic zeolite material has a silicon to metal M molar ratio Si/M of 30 at least 179, preferably of at least 300, or at least 400, or at least 438.
- The metal-containing synthetic zeolite material has a silicon to metal M molar ratio Si/M of at most 1800; or at most 1752; or at most 1500.
- The metal-containing synthetic zeolite material comprises a metal M with a content ranging from 0.1 to 1.5 wt. % with respect to the total mass of the material measured according to EDS-TEM; preferably ranging from 0.3 to 1.2 wt.%, and more preferably ranging from 0.4 to 1.0 wt. %.
- The metal-containing synthetic zeolite material has an average crystal size ranging from 10 to 800 nm preferably from 10 to 600 nm measured by scanning electron microscopy (SEM).
- The metal-containing synthetic zeolite material has dispersed nanocrystals.

With preference, whatever is the framework type of the synthetic zeolite material, one or more of the following embodiments can be used to better define the method:

- In the composition of the solution of step d), the molar ratio M'/M ranges from 1 to 200, preferably from 2 to 100.
- In the composition of the solution of step d), the weight ratio of said synthetic zeolite over the weight of said clear solution ranges from 0.02 to 0.5; preferably from 0.03 to 0.5.
- The separation of step g) is performed by filtration, by centrifugation, by dialysis or by using flocculating agents followed by filtration.
- The drying of the steps b) and/or h) is performed at 60°C preferably 75°C even more preferably at 90°C.
- The drying of the steps b) and/or h) is performed for at least 4h, preferably 8h, even more preferably 24h and at most for 72h, preferably for at most 48h.
- The drying of the steps b) and/or h) is performed via freeze-drying for 48h.
- The washing of the steps b) and/or g) are performed 2 times, preferably 3 times, even more preferably 4.
- The washing of the steps b) and/or g) are performed using water.
- the calcination of steps c) and/or h) is carried out at a temperature ranging from 400°C to 800°C, preferably from 450 to 750°C even more preferably from 500 to 600°C.
- The calcination of steps c) and/or h) is carried out under an air, oxygen or inert atmosphere.
- The calcination of steps c) and/or h) is carried out at atmospheric pressure.

- The calcination of steps c) and/or h) is carried out in the presence of a small amount of water vapours.
- The calcination of steps c) and/or h) is carried out for 8h, more preferably 24h, even more preferably 48h for at most 96h, preferably 72h.
- The step f) is performed at a temperature ranging from 60°C to 120°C.
- The step f) is performed during preferably 24h, preferably 48h, even more preferably 72h preferably for at most 96h
- The synthetic zeolite material comprises a metal M with a content of 0.1 to 1.5 wt. % at most, with respect to the total mass of the material measured according to Energy dispersive spectroscopy - Transmission Electron Microscopy (EDS-TEM).

For example, in step d), the source of M and M' is selected from $Na_2WO_4.2H_2O$, $K_2WO_4$, $NaVO_3$, $KVO_3$, $Na_2MoO_4.2H_2O$, $Na_2MoO_4.4H_2O$, $K_2MoO_4$, $Na_2SnO_3.3H_2O$, $K_2SnO_3.3H_2O$, $Na_2ZrO_3$, $K_2ZrO_3$ or any mixture thereof; preferably selected from $NaVO_3$, $KVO_3$, $Na_2MoO_4.2H_2O$, $Na_2MoO_4.4H_2O$, $K_2MoO_4$, $Na_2SnO_3.3H_2O$, $K_2SnO_3.3H_2O$, or any mixture thereof preferably is or comprises $Na_2MoO_4.4H_2O$.

In a possible embodiment, said first stream includes portions of methane, alkanes, olefins, aromatics, nitrogen, ammonia, water, hydrogen sulphide and carbon dioxide. Hence in step c) hydrogen sulphide and carbon dioxide may at least partially be converted into carbon oxysulfide or carbonyl sulfide.

The preferred reaction temperatures for step c) are in the range of from 120 to 750 °C and the preferred pressure ranges from 0.1 MPa to 20 MPa.

Optional step of separation of the COS from $CO_2$ and $H_2S$

The separation of the COS from $CO_2$ and $H_2S$ can be done by any type of known process. In a preferred embodiment, the unreacted $CO_2$ and $H_2S$ could also be separated via a low-temperature distillation / fractionation to recover the $CO_2$ and $H_2S$ from the suitable selective acid gas absorption medium. One suitable selective acid gas absorption medium is an amine. Other separation techniques known in the art may also be used to separate COS from the $CO_2$ and $H_2S$, such as cryogenic separation or with a membrane or a catalytic membrane.

Electrical Fluidized Bed (step f)

In step f), the COS is converted into CO and sulphur using an electrical fluidized bed. An electrical fluidized bed is a fluidized bed of particles comprising electrodes between which an electrical current is passing to produce heat in the fluidized bed. To do so, at least 10 %wt of the particles of the bed shall be conductive and have a resistivity ranging from 0.001 Ohm.cm to 500 Om.cm at 800°C. In particular, particles such as silicon carbide, mixed oxides and/or mixed sulphides, said mixed oxides and/or said mixed sulphides being ionic or mixed conductor, namely being doped with one or more lower-valent cations can be used. The use of an electrified fluidized bed is particularly advantaging in that it is possible to maintain the temperature at a sufficient level to perform the reaction without the need for an external heating.

The use of at least 10 wt. % of electrically conductive particles within the particles of the bed allows minimizing the loss of heat when a voltage is applied. Thanks to the Joule effect, most, if not all, the electrical energy is transformed into heat that is used for the heating of the reactor medium.

In a preferred embodiment, the volumetric heat generation rate is greater than 0.1 MW/m$^3$ of fluidized bed, more preferably greater than 1 MW/m$^3$, in particular, greater than 3 MW/m$^3$.

In a preferred embodiment, the at least one fluidized bed reactor is devoid of heating means. For example, the at least one fluidized bed reactor comprises a vessel and is devoid of heating means located around or inside the vessel.

For example, the content of electrically conductive particles is ranging from 10 wt. % to 100 wt. % based on the total weight of the particles of the bed; preferably, from 15 wt. % to 95 wt. %, more preferably from 20 wt. % to 90 wt. %, even more preferably from 25 wt. % to 80 wt. % and most preferably from 30 wt. % to 75 wt. %.

For example, the content of electrically conductive particles based on the total weight of the bed is at least 12 wt. % based on the total weight of the particles of the bed; preferably, at least 15 wt. %, more preferably, at least 20 wt. %; even more preferably at least 25 wt. %; and most preferably at least 30 wt. % or at least 40 wt. % or at least 50 wt. % or at least 60 wt. %.

For example, the electrically conductive particles have a resistivity ranging from 0.005 to 400 Ohm.cm at 800°C, preferably ranging from 0.01 to 300 Ohm.cm at 800°C; more preferably ranging from 0.05 to 150 Ohm.cm at 800°C and most preferably ranging from 0.1 to 100 Ohm.cm at 800°C

For example, the electrically conductive particles have a resistivity of at least 0.005 Ohm.cm at 800°C; preferably of at least 0.01 Ohm.cm at 800°C, more preferably of at least 0.05 Ohm.cm at 800°C; even more preferably of at least 0.1 Ohm.cm at 800°C, and most preferably of at least 0.5 Ohm.cm at 800°C.

For example, the electrically conductive particles have a resistivity of at most 400 Ohm.cm at 800°C; preferably of at most 300 Ohm.cm at 800°C, more preferably of at most 200 Ohm.cm at 800°C; even more preferably of at most 150 Ohm.cm at 800°C, and most preferably of at most 100 Ohm.cm at 800°C.

The selection of the content of electrically conductive particles based on the total weight of the particles of the bed and of the electrically conductive particles of a given resistivity influences the temperature reached by the fluidized bed. Thus, in case the targeted temperature is not attained, the person skilled in the art may increase the density of the bed of particles, the content of electrically conductive particles based on the total weight of the particles of the bed and/or select electrically conductive particles with a lower resistivity to increase the temperature reach by the fluidized bed.

For example, the density of the bed of particles is expressed as the void fraction. Void fraction or bed porosity is the volume of voids between the particles divided by the total volume of the bed. At the incipient fluidisation velocity, the void fraction is typically between 0.4 and 0.5. The void fraction can increase up to 0.98 in fast fluidised beds with lower values at the bottom of about 0.5 and higher than 0.9 at the top of the bed. The void fraction can be controlled by the linear velocity of the fluidising gas and can be decreased by recycling solid particles that are recovered at the top and send back to the bottom of the fluidized bed, which compensates the entrainment of solid particles out of the bed.

The void fraction VF is defined as the volume fraction of voids in a bed of particles and is determined according to the following equation:

$$VF = \frac{Vt - Vp}{Vt} \ (1)$$

wherein Vt is the total volume of the bed and is determined by

$$Vt = A\,H \ (2)$$

wherein A is the cross-sectional area of the fluidized bed and H is the height of the fluidized bed; and wherein Vp is the total volume of particles within the fluidized bed.

For example, the void fraction of the bed is ranging from 0.5 to 0.8; preferably ranging from 0.5 to 0.7, more preferably from 0.5 to 0.6. To increase the density of the bed of particles, the void fraction is to be reduced.

For example, the particles of the bed have an average particle size ranging from 5 to 300 μm as determined by sieving according to ASTM D4513-11, preferably ranging from 10 to 200 μm and more preferably ranging from 20 to 200 μm or from 30 to 150 μm.

Determination by sieving according to ASTM D4513-11 is preferred. In case the particles have an average size of below 20 μm the determination of the average size can also be done by Laser Light Scattering according to ASTM D4464-15.

For example, the electrically conductive particles of the bed have an average particle size ranging from 5 to 300 μm as determined by sieving according to ASTM D4513-11, preferably ranging from 10 to 200 μm and more preferably ranging from 30 to 150 μm.

For example, the electrically conductive particles of the bed comprise one or more selected from one or more metallic alloys, one or more non-metallic resistors, one or more metallic carbides, one or more transition metal nitrides, one or more metallic phosphides, one or more carbon-containing particles, one or more superionic conductors, one or more phosphate electrolytes, one or more mixed oxides being doped with one or more lower-valent cations, one or more mixed sulphides being doped with one or more lower-valent cations, and/or any mixture thereof. With preference, the electrically conductive particles of the bed comprise one or more carbon-containing particles and one or more selected from one or more metallic alloys, one or more non-metallic resistors, one or more metallic carbides, one or more transition metal nitrides, one or more metallic phosphides, one or more superionic conductors, one or more phosphate electrolytes, one or more mixed oxides being doped with one or more lower-valent cations, one or more mixed sulphides being doped with one or more lower-valent cations, and/or any mixture thereof.

As alternative, the electrically conductive particles of the bed comprise one or more particles selected from one or more metallic alloys, one or more non-metallic resistors, provided that the non-metallic resistor is not silicon carbide, one or more metallic carbides, one or more transition metal nitrides, one or more metallic phosphides, one or more carbon-containing particles, one or more superionic conductors, one or more phosphate electrolytes, one or more mixed oxides being doped with one or more lower-valent cations and/or one or more and/or mixed sulphides being doped with one or more lower-valent cations and/or any mixture thereof. For example, the electrically conductive particles of the bed comprise one or more selected from one or more metallic alloys, one or more non-metallic resistors, one or more carbon-containing particles, one or more mixed oxides being doped with one or more lower-valent cations, one or more mixed sulphides being doped with one or more lower-valent cations, and/or any mixture thereof.

For example, the electrically conductive particles of the bed comprise one or more carbon-containing particles and one or more selected from one or more metallic alloys, one or more non-metallic resistors, one or more mixed oxides being doped with one or more lower-valent cations, one or more mixed sulphides being doped with one or more lower-valent cations, and/or any mixture thereof.

For example, the electrically conductive particles of the bed comprise one or more selected from one or more metallic alloys, one or more non-metallic resistors, one or more mixed oxides being doped with one or more lower-valent cations, one or more mixed sulphides being doped with one or more lower-valent cations, and/or any mixture thereof.

For example, said one or more **metallic alloys** are selected from Ni-Cr, Fe-Ni-Cr, Fe-Ni-Al or a mixture thereof. With preference, when said metallic alloy comprises at least chromium, the chromium content is at least 15 mol.% of the total molar content of said metallic alloy comprising at least chromium, more preferably at least 20 mol.%, even more preferably at least 25 mol.%, most preferably at least 30 mol.%. Advantageously yet, the iron content in the metallic alloys is at most 2.0% based on the total molar content of said metallic alloy, preferably 10 at most 1.5 mol.%, more preferably at most 1.0 mol.%, even more preferably at most 0.5 mol.%.

For example, a **non-metallic resistor** is silicon carbide (SiC), molybdenum disilicide (MoSi2), nickel silicide (NiSi), sodium silicide (Na2Si), magnesium silicide (Mg2Si), platinum silicide (PtSi), titanium silicide (TiSi2), tungsten silicide (WSi2) or a mixture thereof, preferably silicon carbide.

For example, said one or more **metallic carbides** are selected from iron carbide (Fe3C), molybdenum carbide (such as a mixture of MoC and Mo2C).

For example, said one or more **transition metal nitrides** are selected from zirconium nitride (ZrN), tungsten nitride (such as a mixture of W2N, WN, and WN2), vanadium nitride (VN), tantalum nitride (TaN), and/or niobium nitride (NbN).

For example, said one or more **metallic phosphides** are selected from copper phosphide (Cu3P), indium phosphide (InP), gallium phosphide (GaP), sodium phosphide Na3P), aluminium phosphide (AIP), zinc phosphide (Zn3P2) and/or calcium phosphide (Ca3P2).

For example, said one or more **carbon-containing particles** are selected from graphite, petroleum coke, carbon black, coke or a mixture thereof, preferably graphite.

For example, said one or more **superionic conductors** are selected from LiAlSiO4, Li10GeP2S12, Li3.6Si0.6P0.4O4, sodium superionic conductors (NaSICON), such as Na3Zr2PSi2O12, or sodium beta alumina, such as NaAl11O17, Na1.6Al11O17.3, and/or Na1.76Li0.38Al10.62O17.

For example, said one or more phosphate electrolytes are selected from LiPO4 or LaPO4.

For example, said one or more **mixed oxides** are ionic or mixed conductors being doped with one or more lower-valent cations. Advantageously, said mixed oxides are doped with one or more lower-valent cations, and are selected from oxides having a cubic fluorite structure, perovskite, pyrochlore.

For example, said one or more **mixed sulphides** are ionic or mixed conductors being doped with one or more lower-valent cations.

For example, the electrically conductive particles of the bed are or comprise a non-metallic 5 resistor being silicon carbide.

For example, the electrically conductive particles of the bed comprise a mixture of a non-metallic resistor being silicon carbide and electrically conductive particles different from silicon carbide. The presence of electrically conductive particles different from silicon carbide in the bed is optional. It can be present as a starting material for heating the bed since it was found that the resistivity of silicon carbide at room temperature is too high to start the heating of the bed. Alternatively, to the presence of electrically conductive particles different from silicon carbide, it is possible to provide heat to the reactor for a defined time to start the reaction.

For example, the silicon carbide is selected from sintered silicon carbide, nitride-bounded silicon carbide, recrystallised silicon carbide, reaction bonded silicon carbide and any mixture thereof. The type of silicon carbide material is selected according to the required heating power necessary for supplying the reaction heat of the steam cracking.

For example, the electrically conductive particles of the bed comprise a mixture of a non-metallic resistor being silicon carbide and electrically conductive particles different from silicon carbide and the electrically conductive particles of the bed comprises from 10 wt. % to 99 wt. % of silicon carbide based on the total weight of the electrically conductive of the bed; preferably, from 15 wt. % to 95 wt. %, more preferably from 20 wt. % to 90 wt. %, even more preferably from 25 wt. % to 80 wt. % and most preferably from 30 wt. % to 75 wt. %.

For example, the electrically conductive particles of the bed comprise a mixture of a non-metallic resistor being silicon carbide and electrically conductive particles different from silicon carbide and the said electrically conductive particles different from silicon carbide are one or more carbon-containing particles and/or one or more mixed oxides being doped with one or more lower-valent cations and/or one or more mixed sulphides being doped with one or more lower-valent cations; with preference, the carbon-containing particles are selected from graphite, carbon black, coke, petroleum coke and/or any mixture thereof.

For example, the electrically conductive particles of the bed comprise one or more mixed oxides being ionic conductor, namely being doped with one or more lower-valent cations; with preference, the mixed oxides are selected from:

- one or more oxides having a cubic fluorite structure being at least partially substituted with one or more lower-valent cations, preferentially selected from Sm, Gd, Y, Sc, Yb, Mg, Ca, La, Dy, Er, Eu; and/or
- one or more ABO3-perovskites with A and B tri-valent cations, being at least partially substituted in A position with one or more lower-valent cations, preferentially selected 5 from Ca, Sr, or Mg, and comprising at least one of Ni, Ga, Co, Cr, Mn, Sc, Fe and/or a mixture thereof in B position; and/or
- one or more ABO3-perovskites with A bivalent cation and B tetra-valent cation, being at least partially substituted with one or more lower-valent cations, preferentially selected from magnesium (Mg), scandium (Sc), yttrium (Y), neodymium (Nd) or ytterbium (Yb) in the B position or with a mixture of different B elements in the B position; and/or.
- one or more A2B207-pyrochlores with A trivalent cation and B tetra-valent cation being at least partially substituted in A position with one or more lower-valent cations, preferentially selected from Ca or Mg, and comprising at least one of Sn, Zr and Ti in 15 B position.

Examples of one or more mixed sulphides are

- one or more sulphides having a cubic fluorite structure being at least partially substituted with one or more lower-valent cations, preferentially selected from Sm, Gd, Y, Sc, Yb, Mg, Ca, La, Dy, Er, Eu; and/or
- one or more ABS3 structures with A and B tri-valent cations being at least partially substituted in A position with one or more lower-valent cations, preferably selected from Ca, Sr, or Mg and comprising at least one of Ni, Ga, Co, Cr, Mn, Sc, Fe and/or a mixture thereof in B position; and/or
- one or more $ABS_3$ structures with A bi-valent cation and B tetra-valent cation, being 25 at least partially substituted with one or more lower-valent cations, preferably selected from Mg, Sc, Y, Nd or Yb in the B position or with a mixture of different B elements in the B position; and/or
- one or more $A_2B_2S_7$ structures with A tri-valent cation and B tetra-valent cation, being at least partially substituted in A position with one or more lower-valent cations, preferably selected from Ca or Mg, and comprising at least one of Sn, Zr and Ti in B position.

With preference, the degree of substitution in the one or more mixed oxides doped with one or more lower-valent cations and having a cubic fluorite structure is between 1 and 15 atom% based on the total number of atoms present in the one or more oxides having a cubic fluorite structure, preferably between 3 and 12 atom%, more preferably between 5 and 10 atom%.

With preference, the degree of substitution in the one or more mixed oxides doped with one or more lower-valent cations is between 1 and 50 atom% based on the total number of atoms present in the one or more ABO$_3$-perovskites with A and B tri-valent cations, in the one or more ABO$_3$-perovskites with A bivalent cation and B tetra-valent cation or in the one or more $A_2B_2O_7$-pyrochlores with A trivalent cation and B tetra-valent cation respectively, preferably between 3 and 20 atom%, more preferably between 5 and 15 atom%.

With preference, the degree of substitution in the one or more mixed sulphides doped with one or more lower-valent cations and having a cubic fluorite structure is between 1 and 15 atom% based on the total number of atoms present in the one or more oxides having a cubic fluorite structure, preferably between 3 and 12 atom%, more preferably between 5 and 10 atom%.

With preference, the degree of substitution in the one or more mixed sulphides doped with one or more lower-valent cations is between 1 and 50 atom% based on the total number of atoms present in the one or more ABS$_3$ structures with A and B tri-valent cations, in the one or more ABS$_3$ structures with A bivalent cation and B tetra-valent cation or in the one or more $A_2B_2S_7$ structures with A trivalent cation and B tetra-valent cation respectively, preferably between 3 and 20 atom%, more preferably between 5 and 15 atom%.

For example, the electrically conductive particles of the bed comprise one or more metallic alloys; with preference, one or more metallic alloys are selected from Ni-Cr, Fe-Ni-Cr, Fe-Ni-Al or a mixture thereof.

With preference, when said metallic alloy comprises at least chromium, the chromium content is at least 15 mol.% of the total molar content of said metallic alloy comprising at least chromium, more preferably at least 20 mol.%, even more preferably at least 25 mol.%, most preferably at least 30 mol.%. Advantageously yet, the iron content in the metallic alloys is at most 2.0% based on the total molar content of said metallic alloy, preferably at most 1.5 mol.%, more preferably at most 1.0 mol.%, even more preferably at most 0.5 mol,%.

For example, the electrically conductive particles of the bed comprise a mixture of a non-metallic resistor being silicon carbide and one or more carbon-containing particles different from silicon carbide wherein the carbon-containing particles different from silicon carbide is or comprises graphite particles; with preference, said graphite particles have an average particle size ranging from 5 to 300 μm as determined by sieving according to ASTM D4513-11, more 30 preferably ranging from 10 to 200 μm and most preferably ranging from 30 to 150 μm.

For example, the reaction performed at said step f) is conducted at a temperature ranging from 450C to 3000°C, preferably from 500°C to 2500°C, more preferably from 550°C to 2000°C and most preferably from 600°C to 1500°C.

For example, the reaction performed at said step f) is performed at a pressure ranging between 0.1 MPa and 2.0 MPa, preferably between 0.2 MPa and 1.0 MPa.

In an embodiment, said process comprises a step of pre-heating with a gaseous stream said fluidized bed reactor before conducting said the reaction performed at said step f) in the fluidized bed reactor; with preference, said gaseous stream is a stream of inert gas and/or has a temperature comprised between 500°C and 1200°C. The said embodiment is of interest when the carbon-containing particles of the bed and/or the electro-resistive material has too high resistivity at room temperature to start the electro-heating of the bed.

In a preferred embodiment, the outlet temperature of the reactor may range from 450 to 2500°C, preferably from 500 to 2000°C, more preferably from 550 to 1500°C, more preferably from 600°C to 1200°C.

In a preferred embodiment, the residence time of the third stream in the fluidised bed section of the reactor where the temperature is between may range from 0.01 to 10 seconds, preferably from 0.1 to 2 seconds.

In a preferred embodiment, the reactor outlet pressure may range from -0.1 to 2.0 MPa, more preferably from 0.2 to 1.0MPa.

Effluent from the pyrolysis furnaces comprises unreacted feedstock, desired CO, $S_2$ and possibly some by-products $CO_2$ and $CS_2$.

For example, the step of heating the fluidized bed is performed by passing an electric current at a voltage of at most 300 V through the fluidized bed, preferably at most 200 V, more preferably at most 150 V, even more preferably at most 120 V, most preferably at most 100 V, even most preferably at most 90 V.

For example, said process comprises a step of pre-heating with a gaseous stream said fluidized bed reactor before conducting said the reaction performed at said step f) in the fluidized bed reactor; with preference, said gaseous stream is a stream of inert gas and/or has a temperature comprised between 250°C and 450°C.

Separation of the CO from the Sulphur and the COS

Once the COS is put in contact in step f) with the second catalyst the effluents are recovered in step g). The effluents can be further separated. The sulphur being a solid at ambient temperature and pressure is easily separated as a solid. The separation could be achieved by cooling of the effluent stream from cracking reactor to the temperatures below 444°C (molten sulfur) or below 115°C (solid sulfur). The unconverted COS is separated from the CO via usual means such as distillation, membrane separation, preferential adsorption etc. The unconverted COS recovered after step f) is preferably recycled at the inlet of step f) to be further converted.

Optional step of $CS_2$ hydrolysis

Advantageously, per the invention, the carbonyl sulphide and/or carbon disulphide are preferably hydrolyzed at a temperature below 350° C.

In preferred embodiments, the reactor for COS and/or $CS_2$ hydrolysis operates at low pressure (generally 0.01 to 0.1 barg, typically about 0.05 barg).

Hydrolysis step could be performed on a catalyst. Examples of such catalysts include, but are not limited to, Al2O3, TiO2, Cu/Al2O3, CoMo/Al2O3, and suitable combinations thereof.

**Examples**

Conversion of COS in an Electrical Fluidized Bed

Example 1:

The feedstock was constituted of COS from Sigma Aldrich (purity>97.5%, Sigma Aldrich). The COS cylinder was connected to the feed system of a pilot unit equipped with an electrothermal fluidized bed reactor with quartz walls and inner diameter of 5.5 cm, charged with graphite particles of an average size of 0.25 mm.

The system was started up with Ar flow to create fluidization and reach bed temperature of 1100°C. Then the flow of COS was started and flow of Ar was stopped. The flow of COS was adjusted to have a residence time <0.5 second in the hot zone of the reactor.

The effluent of the reactor was connected to an air-cooled trap with for sulfur capture with an outlet line entering a GC with TCD detector suitable for analysis of gas mixture components.

Argon gas was connected to the inlet line of GC to be used as an internal standard. The analysis of the effluents are provided in table 1.

Example 2:

The test was performed with a model mixture comprising 70 vol.% of COS (>97.5%, Sigma Aldrich) and 30 vol.% of CO2 (>99%, Air Products). The system was started up with Ar flow to create fluidization and reach bed temperature of 1100°C. Then the flow of COS was started and flow of Ar was stopped. The flow of COS was adjusted to have a residence time <0.5 second in the hot zone of the reactor.

The effluent of the reactor was connected to an air-cooled trap with for sulfur capture with an outlet line entering a GC with TCD detector suitable for analysis of gas mixture components. Argon gas was connected to the inlet line of GC to be used as an internal standard. The analysis of the effluents is provided in the table 1.

Table 1: analysis of the effluents of example 1 and 2.

|  | Example 1 | Example 2 |
|---|---|---|
| COS in gas mixture, mol.% | 100 | 70 |
| Partial pressure (COS), bara | 1.05 | 0.74 |
| T, °C | 900 | 1100 |
| r(COS), sec (*) | <0.5 | <0.5 |
| x(COS), % (**) | 62 | 56 |
| s(CO), % (***) | 87 | 95 |
| (*) residence time in second ; (**) conversion of COS in percent; (***) selectivity in percent | | |

The table 1 shows that it is possible to convert COS into CO in presence of CO2 in an electrical fluidized bed.

**Claims**

1. Process for the incorporation of carbon dioxide ($CO_2$) into a hydrocarbon comprising the following steps:

   b) Providing a first stream containing at least 30 wt. % of carbon dioxide and at least 20 wt. % of hydrogen sulphide ($H_2S$) based on the total weight of said first stream;
   c) Converting said first stream into a second stream containing at least 10 wt. % of carbonyl sulphide (COS) based on the total weight of said second stream and water at a temperature ranging from 50 to 800°C, at a pressure ranging from 0.01 to 5 MPa (from 0.1 to 50 bar) and at a GHSV ranging from 0.1 to 10 h$^{-1}$;
   d) Separating from said second stream water and preferably separating the unconverted carbon dioxide and the unconverted hydrogen sulphide if any to obtain a third stream containing at least 10 % wt of carbonyl sulphide ;
   f) Putting said third stream in an electrical fluidized bed to obtain a fourth stream containing carbon monoxide (CO) and sulphur vapor ($S_2$);
   g) Recovering from said fourth stream sulphur vapor and a fifth stream containing carbon monoxide and optionally carbon disulphide ($CS_2$) if any;
   i) Converting the carbon monoxide of said fifth stream into (ii) alcohols being further converted into olefins or converting the carbon monoxide of said fifth stream into (iii) hydrocarbons in presence of hydrogen to incorporated it into a further hydrocarbon stream or any combinations of (ii) or (iii);

   **characterized in that** said electrical fluidized bed of step f) comprises at least one fluidized bed reactor comprising at least two electrodes, a bed comprising particles, and optionally a solid discharge system wherein said particles of the bed are in a fluidized state by passing upwardly through the said bed a fluid stream, to obtain a fluidized bed and wherein the heating of said fluidized bed is done at a temperature ranging from 100°C to 3000°C to convert carbonyl sulphide into carbon monoxide and sulphur and wherein the particles of said electrical fluidized bed comprise electrically conductive particles, wherein at least 10 wt. % of the particles based on the total weight of the particles of the bed are electrically conductive particles and have a resistivity ranging from 0.001 Ohm.cm to 500 Ohm.cm at 800°C and wherein said heating the fluidized bed is performed by passing an electric current through the fluidized bed.

2. Process according to claim 1, **characterized in that** said process comprises one or more of the following steps:

a) Providing a gaseous hydrotreatment stream effluent containing from 10 to 8.0 wt. % of hydrogen and from 5 to 40 wt. % of hydrogen sulphide based on the total weight of said gaseous hydrotreatment stream effluent, preferably the gaseous hydrotreatment stream effluent originates from an hydrotreatment, separating from this gaseous hydrotreatment stream effluent the hydrogen and the carbon monoxide if any from the hydrogen sulphide, preferably in a first amine wash, and sending the hydrogen sulphide obtained in said first stream; and/or

e) After step d), the unconverted carbon dioxide and the unconverted hydrogen sulphide are recycled at the inlet of said step b); and/or

h) after step g), the carbon disulphide is separated from the fifth stream and hydrolysed into carbon monoxide and carbon dioxide in presence of water at a temperature ranging from 50 to 800°C, at a pressure ranging from 0.1 to 5 MPa (1 to 50 bar) and at a GHSV ranging from 0.1 to 10 h$^{-1}$ over a catalyst being alumina ($Al_2O_3$), titania ($TiO_2$), ruthenia ($RuO_2$) or any mixture thereof; and/or

j) the carbon disulphide recovered at g) is hydrolysed at a temperature ranging from 50 to 400°C, a pressure ranging from 0.1 to 5 MPa (from 1 to 50 bar) with at least a molar ratio of water over carbonyl sulphide of at least 1.5 to recover carbon dioxide and/or carbonyl sulphide being further sent back to the steps b) or c).

3. The process according to claim 1 or 2; **characterized in that** the hydrogen used in said step i) for the conversion of said carbon monoxide into (ii) alcohols and/or into (iii) hydrocarbon is originating from said step a).

4. The process according to any one of the preceding claims, **characterized**

- **in that** in said step d) water is removed with a sorbent being preferably the sorbent is selected from silica, silica gel, molecular sieves or any mixture thereof; and/or
- **in that** said step c) and said step d) are performed simultaneously in the same reactor with said sorbent.

5. The process according to any of the preceding claims; **characterized in that** said steps c) is performed in the presence of a catalyst; with preference said step c) and said step d) are performed simultaneously in the same reactor with a sorbent and with a catalyst and/or said catalyst is a molecular sieve 3A.

6. The process according to any of the preceding claims wherein :

- the carbon monoxide recovered at step i) is converted into (ii) an alcohol via a chemical process being performed at a pressure ranging from 5 to 200 bar and/or at a temperature ranging from 150 to 350 °C, preferably the chemical process is a catalytic reaction using a catalyst containing Cu, Zn, Al, Ga, Sn, Ge, Mn, Mg, Zr, Cr, Ba, W and/or Ce; and/or
- the carbon monoxide recovered at step i) is converted into hydrocarbon via the Fischer Tropsch reaction at temperatures ranging from 150 to 350°C, at a pressure ranging from 1 to 100 bara and/or under a catalytic reaction using a catalyst containing Co, Ru, and/or Fe deposited on silica and/or alumina or any mixture thereof.

7. The process according to any of the preceding claims **characterized in that** the carbon dioxide of said first stream originates from the exhaust gas of refinery streams, water-gas shift units, steam reforming units, biogas digesters, native carbon dioxide from natural gas or direct air capture units being further concentrated in a second amine wash.

8. The process according to any of the preceding claims wherein said sulphur recovered in step e) is in the form of liquid sulphur being preferably S2 and/or S8.

9. The process according to any of the preceding claims wherein said step c) is performed in a fixed bed preferably using a sulphide catalyst being preferably a catalyst that comprises at least one metal of group VIB as for example Mo, W in combination or not with a promotor selected from at least one metal of group VIII and/ VIIIB as for example Ni and/or Co, and/or mixture thereof, these metals being used in sulfided form and preferably supported on alumina, titania, zirconia, silica, carbon and/or mixtures thereof.

10. The process according to any of the preceding claims, **characterized in that**:

- said third stream of step c) comprises at least 15 % wt of carbonyl sulphide based on the total weight of said third stream of step c); preferably at least 20 wt. % of carbonyl sulphide to at most 80 wt. %; and/or
- said first stream comprises at least 20 wt. % of carbon dioxide based on the total weight of said first stream; and/or
- said first stream comprises at least 20 wt. % of hydrogen sulphide based on the total weight of said first stream.

**11.** The process according to any of the preceding claims **characterized in that** in said step g) the recovery of said carbon monoxide from said sulphur is performed via a gas-solid separation, preferably the purity of the carbon monoxide obtained is of at least 80 %, even more preferably at least 90 % the most preferred at least 95 %.

**12.** The process according to any of the preceding claims **characterized in that** said sulphur recovered at step f) is a mixture of S2 and S8 that is further treated to convert said S2 into S8 with a yield of at least 95 % by cooling the stream to temperatures below 444°C.

**13.** The process according to any of the preceding claims **characterized in that** the unconverted carbon dioxide and the unconverted hydrogen sulphide recovered at step d) are recycled at the inlet of step c).

**14.** The process according to any of the preceding claims **characterized in that** the heating of said fluidized bed in said step f) is done at a temperature ranging from 700 to 1400°C and/or wherein said bed comprising particles of said fluidized bed in said step f) comprises particles of a catalytic composition.

**15.** Installation to carry out the process of incorporation of carbon dioxide into a hydrocarbon according to any of the preceding claims **characterized in that** it comprises:

- A $CO_2$ sulphuration unit,
- A first separation unit,
- A COS decomposition unit,
- A second separation unit, and
- A CO conversion unit

wherein the $CO_2$ sulphuration unit, the first separation unit, the COS decomposition unit, the second separation unit and the CO conversion unit are fluidically connected in series in the order mentioned;
wherein said installation further comprises at least a recycle line to recycle the unconverted carbon dioxide and the unconverted hydrogen sulphide separated in said first separation unit into said $CO_2$ sulphuration unit;
wherein said installation further comprises at least a recycle line to recycle the unconverted COS separated for said second separation unit into said COS decomposition unit;
wherein the effluents of the CO conversion unit are further incorporated into an hydrocarbon stream.

(101)    (103)    (104)    (105)    (107)

(102)

(106)

(108)

(109)

Figure 1

(101)    (103)    (104)    (105)    (107)

(109)    (106)

(108)

(111)

(110)

(112)

Figure 2

Figure 3

Europäisches
Patentamt

European
Patent Office

Office européen
des brevets

# EUROPEAN SEARCH REPORT

Application Number

EP 21 31 5098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 248 444 A (EXXON PRODUCTION RESEARCH CO [US]) 8 April 1992 (1992-04-08) <br> * page 6, line 12 - line 29; claim 1; figure 1 * <br> * page 8, line 5 * <br> * page 8, line 8 * <br> * page 8, line 24 - page 9, line 4 * <br> ----- | 1-15 | INV. <br> C10G2/00 <br> B01D53/32 <br> C01B17/04 <br> C01B32/40 <br> C01B32/50 |
| A | US 3 025 385 A (YUKIO TANAKA) 13 March 1962 (1962-03-13) <br> * claim 1; figure 1 * <br> ----- | 1-15 | |
| A | CA 630 652 A (EXXON RESEARCH ENGINEERING CO) 7 November 1961 (1961-11-07) <br> * claim 1; figure 1 * <br> ----- | 1-15 | |
| A | US 4 618 723 A (HERRINGTON DANIEL R [US] ET AL) 21 October 1986 (1986-10-21) <br> * the whole document * <br> ----- | 1-15 | |
| | | | TECHNICAL FIELDS SEARCHED (IPC) <br><br> C10G <br> B01D <br> C01B |

The present search report has been drawn up for all claims

| Place of search | Date of completion of the search | Examiner |
|---|---|---|
| The Hague | 12 November 2021 | Deurinck, Patricia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 31 5098

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2021

| Patent document cited in search report | | Publication date | Patent family member(s) | | Publication date |
|---|---|---|---|---|---|
| GB 2248444 | A | 08-04-1992 | CA | 2024525 A1 | 05-03-1992 |
| | | | GB | 2248444 A | 08-04-1992 |
| US 3025385 | A | 13-03-1962 | AT | 219735 B | 12-02-1962 |
| | | | BE | 589173 A | 18-07-1960 |
| | | | CH | 381778 A | 15-09-1964 |
| | | | DE | 1180385 B | 29-10-1964 |
| | | | DE | 1801748 U | 10-12-1959 |
| | | | FR | 1233467 A | 12-10-1960 |
| | | | GB | 885607 A | 28-12-1961 |
| | | | NL | 121306 C | 16-05-1966 |
| | | | NL | 250808 A | 16-05-1966 |
| | | | US | 3025385 A | 13-03-1962 |
| CA 630652 | A | 07-11-1961 | NONE | | |
| US 4618723 | A | 21-10-1986 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011084973 A
- US 4999178 A
- WO 2018127852 A
- US 20160185596 A
- WO 0208119 A